# EUROPEAN PATENT APPLICATION

(11) **EP 4 207 419 A1**
(43) Date of publication of application: **05.07.2023**
(21) Application number: 22774108.9
(22) Date of filing: 16.03.2022
(51) Int. Cl.: H01M 10/0525

(54) **BATTERY MODULE AND POWERED DEVICE**

(30) Priority: 22.03.2021 CN 202120583750 U
(71) Applicant: DONGGUAN POWERAMP TECHNOLOGY LIMITED, Dongguan, Guangdong 523000 (CN)
(72) Inventor: NONG, Wenbin, Dongguan, Guangdong 523000 (CN); LI, Kunlong, Dongguan, Guangdong 523000 (CN)
(74) Representative: Klunker IP Patentanwälte PartG mbB
(86) International application number: PCT/CN2022/081237
(87) International publication number: WO 2022/199447

(57) **Abstract**

This application relates to the technical field of battery devices, and in particular, discloses a battery module and an electrical device. The battery module includes: a housing, a cell assembly, and a plurality of first busbars. The housing defines an accommodation cavity. The housing includes a first housing and a second housing. The first housing is fixed to the second housing. The first housing and the second housing together form the accommodation cavity. The cell assembly is disposed in the accommodation cavity. The cell assembly includes a plurality of battery cells. Each battery cell includes a packaging shell and an electrode disposed on an outer side of the packaging shell. The electrode includes a first electrode terminal and a second electrode terminal. The first housing includes a first top wall and a plurality of first sidewalls connected to the first top wall. The first top wall includes a first through-hole. The plurality of first busbars are disposed on the first top wall. The plurality of first busbars are connected to the first electrode terminals through the first through-hole. In this way, this application improves the efficiency and convenience of assembling the battery module.

## Description

### CROSS-REFERENCE TO RELATED APPLICATIONS

This application claims priority to Chinese Patent Application No. 202120583750.1, filed with the Chinese Patent Office on March 22, 2021 and entitled "BATTERY MODULE AND ELECTRICAL DEVICE", which is incorporated herein by reference in its entirety.

### TECHNICAL FIELD

This application relates to the technical field of battery devices, and in particular, to a battery module and an electrical device.

### BACKGROUND

Currently, as the power lithium battery industry is developing very rapidly, the application of power lithium batteries has been extended to fields such as electric buses, electric cars, micro-transit services, and energy storage, and higher requirements have been imposed on the module assembling efficiency, structural strength, and safety performance of battery modules.

However, in a process of implementing this application, the applicant of this application finds that an existing battery module usually includes a busbar and a housing. A battery cell needs to be manually connected to the busbar, and then the battery cell is packaged by using the housing, thereby resulting in relatively low efficiency and inconvenience of assembling the battery module.

### SUMMARY

In view of the foregoing problems, some embodiments of this application provide a battery module and an electrical device to improve the efficiency of assembling the battery module.

According to a first aspect of this application, this application provides a battery module, including: a housing, a cell assembly, and a plurality of first busbars. The housing defines an accommodation cavity. The housing includes a first housing and a second housing. The first housing is fixed to the second housing. The first housing and the second housing together form the accommodation cavity. The cell assembly is disposed in the accommodation cavity. The cell assembly includes battery cells. Each battery cell includes a packaging shell and an electrode disposed on an outer side of the packaging shell. The electrode includes a first electrode terminal and a second electrode terminal. The first housing includes a first top wall and a plurality of first sidewalls connected to the first top wall. The first top wall includes a first through-hole. The plurality of first busbars are disposed on the first top wall. The plurality of first busbars are connected to the first electrode terminals through the first through-hole. To assemble a battery, the first busbars can be connected to the battery cells by just directly fixing the first housing and the second housing together, thereby improving the efficiency and convenience of assembling the battery module.

In an optional manner, the second housing includes a second top wall and a plurality of second sidewalls connected to the second top wall. The second top wall is disposed opposite to the first top wall. The second top wall includes a second through-hole. The first electrode terminal and the second electrode terminal are disposed at two opposite ends of the packaging shell. The battery module includes a plurality of second busbars. The plurality of second busbars are connected to the second electrode terminals through the second through-hole. With the plurality of second busbars connected to the second electrode terminals of the battery cells, electrical conduction is implemented between the plurality of battery cells in the battery module to enable normal working of the battery module.

In an optional manner, the first electrode terminals and the second electrode terminals are disposed at a same end of the packaging shell, and the plurality of first busbars are connected to the second electrode terminals. With the plurality of first busbars connected to the second electrode terminals of the battery cells, electrical conduction can be implemented between the plurality of battery cells in the battery module by disposing just the first busbars, so as to enable normal working of the battery module.

In a possible manner, the first top wall of the first housing includes a plurality of first busways. One of the first busways communicates with at least two first through-holes. One of the first busbars is disposed in one of the first busways. As viewed along a first direction, at least one electrode of the battery cell is located in one of the first through-holes. The plurality of first busbars may be connected to at least one electrode in the first through-hole.

In an optional manner, the second top wall of the second housing includes a plurality of second busways. One of the second busways communicates with at least two second through-holes. One of the second busbars is disposed in one of the second busways. As viewed along a direction opposite to a first direction, at least one electrode of the battery cell is located in one of the second through-holes. The plurality of second busbars may be connected to at least one electrode in the second through-hole.

In an optional manner, the first housing includes a first accommodation trough. The second housing includes a second accommodation trough. The first accommodation trough and the second accommodation trough jointly form the accommodation cavity.

In an optional manner, the first housing includes a plurality of first troughs. The plurality of first troughs communicate with the first accommodation trough. The second housing includes a plurality of second troughs. The second troughs communicate with the second accommodation trough. A first end of one of the battery cells is disposed in one of the first troughs. A second end of the battery cell is disposed in one of the second troughs. The first electrode terminal is disposed at the first end, and the second electrode terminal is disposed at the second end. The plurality of first troughs and the plurality of second troughs limit the positions of a plurality of battery cells. One first trough and one second trough limit the position of one battery cell, thereby reducing the relative displacement between the battery cell and the housing in the accommodation cavity.

In an optional manner, the first busbar includes a first positioning hole. A first positioning rod extends from the first housing away from the battery cell. The first positioning rod is plugged into the first positioning hole. The first positioning hole and the first positioning rod can limit the position of the first busbar to the first top wall of the first housing, and limit the movement of the first busbar.

In an optional manner, a guide block is disposed on a sidewall of the first busway, the sidewall away from the first positioning rod. The guide block includes a sloping side. The guide block can restrict the first busbar from moving away from the housing.

In an optional manner, the battery module includes a circuit board. The circuit board is disposed in the accommodation cavity. The circuit board is connected to the plurality of battery cells. The battery module includes a sampling assembly. The sampling assembly includes a sampling wire. One end of the sampling wire is connected to the circuit board, and another of the sampling wire is connected to electrodes of the plurality of battery cells. The sampling assembly is configured to sample voltage and temperature of the battery cells.

In an optional manner, the sampling wire includes a first sampling wire. The first sampling wire is disposed on a surface the first housing, the surface away from the battery cells. One end of the first sampling wire is connected to the circuit board, and another of the first sampling wire is connected to the plurality of battery cells. The first sampling wire is configured to sample the voltage of the battery cells located on one side of the housing, that is, the voltage of the battery cells located on the side of the first housing.

In an optional manner, the sampling wire includes a second sampling wire. The second sampling wire is disposed on a surface of the second housing, the surface away from the battery cells. One end of the second sampling wire is connected to the circuit board, and another of the second sampling wire is connected to the plurality of battery cells. The second sampling wire is configured to sample the voltage of the battery cells located on the other side of the housing, that is, the voltage of the battery cells located on the side of the second housing.

In an optional manner, the battery module includes a first conductive strip and a second conductive strip. One end of the first conductive strip is connected to the circuit board, and another of the first conductive strip is connected to the first electrode terminal of the battery cell. One end of the second conductive strip is connected to the circuit board, and another of the second conductive strip is connected to the second electrode terminal of the battery cell. The first conductive strip and the second conductive strip implement electrical connection between the circuit board and the battery cells.

In an optional manner, the first housing includes a third through-hole. The third through-hole is available for being passed through by the first conductive strip. The second housing includes a fourth through-hole. The fourth through-hole is available for being passed through by the second conductive strip. The third through-hole and the fourth through-hole facilitate the first conductive strip and the second conductive strip to get connected to the electrodes of the battery cells after passing through the through-holes.

In an optional manner, the first housing includes a fifth through-hole and a sixth through-hole. The fifth through-hole is available for being passed through by the first conductive strip, and the sixth through-hole is available for being passed through by the second conductive strip. The fifth through-hole and the sixth through-hole facilitate the first conductive strip and the second conductive strip to get connected to the electrodes of the battery cells after passing through the first housing.

In an optional manner, the sampling wire includes a jack plug. The circuit board includes a jack, and the jack plug is plugged into the jack. The jack plug and the jack facilitate direct connection and detachment between the sampling wire and the circuit board.

In an optional manner, a first fixing slot and a first opening are provided on one of opposite first sidewalls of the first housing, the first fixing slot and the first opening communicates with the first fixing slot. A second fixing slot and a second opening are provided on an inner side of one of opposite second sidewalls of the second housing, the second fixing slot and the second opening communicates with the second fixing slot,. One end of the circuit board is snap-fitted into the first fixing slot through the first opening, and another of the circuit board is snap-fitted into the second fixing slot through the second opening. The first fixing slot and the second fixing slot can fix the circuit board inside the accommodation cavity of the housing.

In an optional manner, the battery module includes a resin layer. The resin layer bonds and fixes the plurality of battery cells, and/or bonds and fixes the plurality of battery cells to the first housing, and/or bonds and fixes the plurality of battery cells to the second housing.

In an optional manner, the battery module includes a first baffle and a second baffle. The first baffle overlays a surface of the first housing, the surface oriented away from the battery cell, and the second baffle overlays a surface of the second housing, the surface oriented away from the battery cell. The first baffle is configured to protect the first busbar on the first top wall, reduce the probability of contact between the first busbar and an external component, and serve a function of sealing the side of the first housing of the battery module. The second baffle is configured to protect the second busbar disposed on the second top wall, reduce the probability of contact between the second busbar and an external component, and serve a function of sealing the side of the second housing of the battery module.

According to another aspect of this application, an electrical device is provided, including the battery module described above.

Beneficial effects of some embodiments of this application are as follows: A housing, a cell assembly, and a first busbar are disposed. The housing defines an accommodation cavity. The housing includes a first housing and a second housing. The first housing is fixed to the second housing. The first housing and the second housing together form the accommodation cavity. The cell assembly is disposed in the accommodation cavity. The cell assembly includes a plurality of battery cells. Each battery cell includes a packaging shell and an electrode disposed on an outer side of the packaging shell. The electrode includes a first electrode terminal and a second electrode terminal. The first housing includes a first top wall and a plurality of first sidewalls connected to the first top wall. The first top wall includes a first through-hole. In addition, a plurality of first busbars are disposed on the first top wall, and the plurality of first busbars are connected to the first electrode terminals through the first through-holes. In this way, because the first busbars are directly disposed on the top wall of the first housing, in a process of assembling a battery module, the first busbars can be connected to the battery cells by just directly fixing the first housing and the second housing together, thereby improving the efficiency and convenience of assembling the battery module.

### BRIEF DESCRIPTION OF THE DRAWINGS

To describe the technical solutions in the specific some embodiments of this application or the prior art more clearly, the following outlines the drawings that need to be used in the descriptions of the specific some embodiments of this application or the prior art. In all the drawings, similar elements or parts are generally identified by similar reference numerals. The elements or parts in the drawings are not necessarily drawn to scale.
FIG. 1 is a schematic assembling diagram of an overall structure of a battery module according to an embodiment of this application;
FIG. 2 is a schematic exploded view of a partial structure of a battery module according to an embodiment of this application;
FIG. 3 is a schematic exploded view of a partial structure of a battery module according to an embodiment of this application;
FIG. 4 is a schematic exploded view of a first housing and a first busbar of a battery module according to an embodiment of this application;
FIG. 5 is a schematic close-up view of a part A shown in FIG. 4;
FIG. 6 is a schematic exploded view of a first housing and a circuit board of a battery module according to an embodiment of this application;
FIG. 7 is a schematic close-up view of a part C shown in FIG. 6;
FIG. 8 is a partial schematic sectional view of a first housing of a battery module according to an embodiment of this application;
FIG. 9 is a schematic exploded view of a first housing and a second housing of a battery module according to an embodiment of this application;
FIG. 10 is a schematic diagram of an overall structure of a second housing of a battery module according to an embodiment of this application;
FIG. 11 is a partial schematic sectional view of a second housing of a battery module according to an embodiment of this application;
FIG. 12 is a schematic structural diagram of a single battery cell of a battery module according to an embodiment of this application;
FIG. 13 is a top view of a partial structure of a battery module according to an embodiment of this application;
FIG. 14 is a schematic exploded view of a partial structure of a battery module according to an embodiment of this application;
FIG. 15 is a schematic exploded view of a partial structure of a battery module according to an embodiment of this application;
FIG. 16 is a schematic close-up view of a part E shown in FIG. 14;
FIG. 17 is a schematic close-up view of a part B shown in FIG. 14;
FIG. 18 is a schematic assembling diagram of a partial structure of a battery module according to an embodiment of this application;
FIG. 19 is a schematic structural diagram of a circuit board of a battery module according to an embodiment of this application;
FIG. 20 is a schematic exploded view of a partial structure of a battery module according to another embodiment of this application;
FIG. 21 is a schematic exploded view of a second housing and a second busbar of a battery module according to another embodiment of this application; and
FIG. 22 is a flowchart of an assembling process of a battery module according to an embodiment of this application.

Reference numerals: 10. housing; 11. first housing; 11a. first accommodation trough; 11b. third sidewall; 11c. fourth sidewall; 11d. fifth sidewall; 11e. sixth sidewall; 111. first top wall; 1111. first through-hole; 1112. first busway; 1112a. guide block; 1113. first positioning rod; 1114. first snap slot; 112. a plurality of first sidewalls; 113. a plurality of first troughs; 114. third through-hole; 115. groove; 116. first fixing slot; 116a. first opening; 117. outlet; 12. second housing; 12a. second accommodation trough; 121. second top wall; 1211. second through-hole; 1212. second busway; 1213. second snap slot; 122. a plurality of second sidewalls; 123. a plurality of second troughs; 124. fourth through-holes; 125. second fixing slot; 125a. second opening; 126. glue injection hole; 20. cell assembly; 21. a plurality of battery cells; 211. packaging shell; 212. electrode terminal; 212a. first part; 212b. second part; 212c. conductive electrode post; 2121. first electrode terminal; 2122. second electrode terminal; 40. a plurality of first busbars; 50. circuit board; 501. jack; 502. external wire; 503. first snap block; 504. second snap block; 60. sampling assembly; 61. sampling wire; 61a. first sampling wire; 61b. second sampling wire; 62. reinforcing plate; 62a. first reinforcing plate; 62b. second reinforcing plate; 70. first conductive strip; 80. second conductive strip; 90. first baffle; 100. second baffle; 110. a plurality of second busbars.

### DETAILED DESCRIPTION OF EMBODIMENTS

For ease of understanding this application, the following describes this application in more detail with reference to drawings and specific some embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific some embodiments but not to limit this application. The term "and/or" used herein is intended to include any and all combinations of one or more relevant items recited.

To describe the structure of a battery module more clearly, the structure of the battery module will be described by using X, Y, and Z coordinate axes. The X-axis, the Y-axis, and Z-axis are perpendicular to one other. A first direction is a positive direction of the Z-axis, a second direction is a positive direction of the Y-axis, and a third direction is a positive direction of the X-axis.

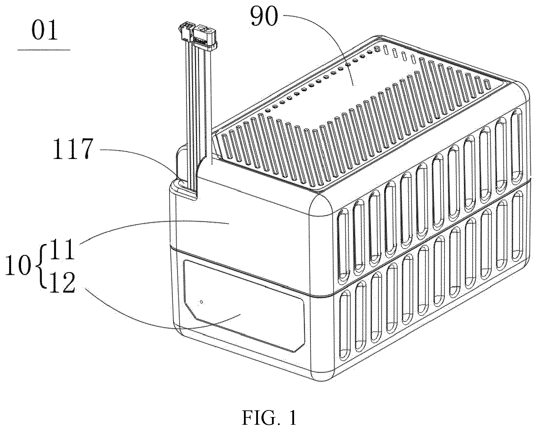

Referring to FIG. 1 to FIG. 3, the battery module 01 includes a housing 10, a cell assembly 20, and a plurality of first busbars 40. The plurality of battery cells 21 of the cell assembly 20 are disposed inside the housing 10. The first busbar 40 is disposed on an outer side the housing 10 and connected to the plurality of battery cells 21. The battery module can be assembled by directly connecting the battery cells 21 to the first busbars 40 disposed on the outer side of the housing 10, thereby improving the efficiency and convenience of assembling the battery module. The battery module 01 may be disposed in the electrical device to serve a function of charging and discharging in the electrical device.

The battery module 01 further includes a resin layer (not shown in the drawing), a circuit board 50, a sampling assembly 60, a first conductive strip 70, a second conductive strip 80, a first baffle 90, and a second baffle 100. The resin layer is disposed between a plurality of battery cells 21. The circuit board 50 is disposed in the housing 10. The sampling assembly 60 is connected to the circuit board 50. The sampling assembly 60 is connected to the first busbar 40. The first conductive strip 70 connects the circuit board 50 to an electrode terminal 212 of each of the plurality of battery cells 21. The second conductive strip 80 connects the circuit board 50 to the other electrode terminal 212 of each of the plurality of battery cells 21. The first baffle 90 and the second baffle 100 overlay an outer surface of the housing 10.

Specifically, with respect to the housing 10, as shown in FIG. 1, the housing 10 defines an accommodation cavity (not shown in the drawing). The housing 10 includes a first housing 11 and a second housing 12. The first housing 11 is fixed to the second housing 12. The first housing 11 and the second housing 12 together form the accommodation cavity. The accommodation cavity is configured to accommodate the cell assembly 20.

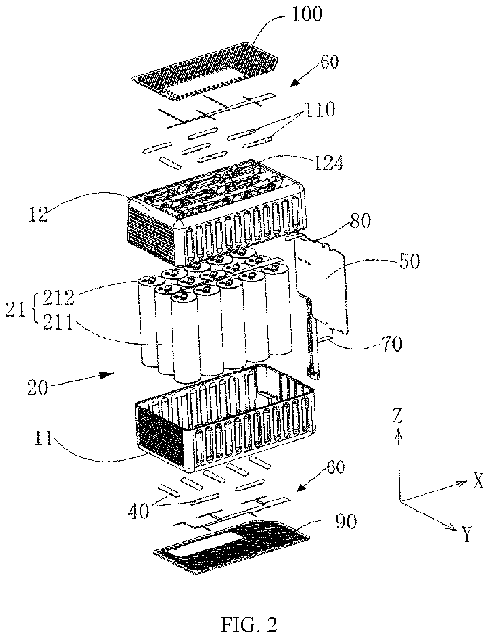

With respect to the first housing 11, as shown in FIG. 2 to FIG. 4, the first housing 11 includes a first top wall 111 and a plurality of first sidewalls 112 connected to the first top wall 111. The first top wall 111 includes a first through-hole 1111. The first through-hole 1111 facilitates connection between the first busbar 40 and the battery cells 21. Preferably, the first through-hole 1111 runs through the first top wall 111. Preferably, the first housing 11 includes a first top wall 111 and four first sidewalls 112 connected to the first top wall 111. The first top wall 111 and the four first sidewalls 112 together form the first accommodation trough 11a.

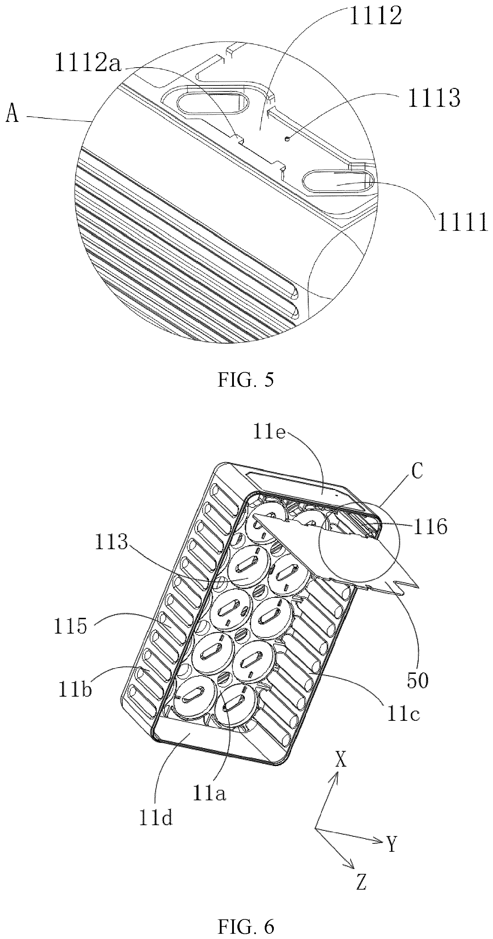

In some embodiments, as shown in FIG. 2 and FIG. 6, the first housing 11 includes a third sidewall 11b and a fourth sidewall 11c that are disposed opposite to each other along the second direction, and includes a fifth sidewall 11d and a sixth sidewall 11e that are disposed opposite to each other along the third direction. The third sidewall 11b, the fifth sidewall 11d, the fourth sidewall 11c, and the sixth sidewall 11e are sequentially connected, and, together with the first top wall 111, together form the first accommodation trough 11a. Preferably, the first positioning rod 1113 fits with the first positioning hole to fix the first busbar 40 onto the first top wall 111 of the first housing 11, so as to limit the movement of the first busbar 40. Understandably, the first positioning rod 1113 is not limited to being located on the first housing 11, and the first positioning hole is not limited to being located on the first busbar 40, but may be located at other positions instead, as long as the first busbar 40 is fixed onto the first top wall 111 of the first housing 11. For example, the first positioning rod 1113 is disposed on the first busbar 40, and the first positioning hole is provided on the first top wall 111.

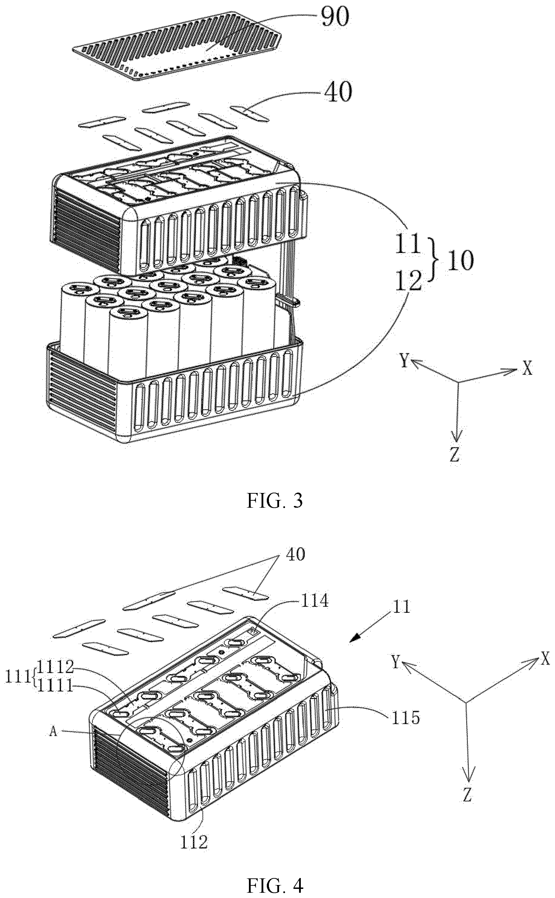

In some embodiments, as shown in FIG. 4 and FIG. 5, a guide block 1112a is disposed on a sidewall that is of the first busway 1112 and that is away from the first positioning rod 1113, and the guide block 1112a includes a sloping side. The guide block 1112a facilitates placement of the first busbar 40 into the first busway 1112. The guide block 1112a can restrict the first busbar 40 from moving away from the housing 10.

In some embodiments, the first housing 11 includes a third through-hole 114. The third through-hole 114 is available for being passed through by the first conductive strip 70, and then the first conductive strip is connected to the first electrode terminal 2121 of the battery cell 21.

In some embodiments, a groove 115 is provided on a first sidewall 112 of the first housing 11. The design of the groove 115 can save materials and increase the strength of the first sidewall 112.

In some embodiments, as shown in FIG. 6 to FIG. 8, the first housing 11 includes a first accommodation trough 11a. The first accommodation trough 11a is configured to accommodate the plurality of battery cells 21.

In some embodiments, the first housing 11 includes a plurality of first troughs 113. The plurality of first troughs 113 communicate with the first accommodation trough 11a. Each first trough 113 is configured to hold a first end of a battery cell 21 to limit the position of the battery cell 21 and reduce the relative displacement between the battery cell 21 and the housing 10 in the accommodation cavity.

Understandably, the shape of the first trough 113 is not limited to a circular shape, but may be another shape instead. The shape of the first trough 113 may be set according to the actual shape of the battery cell 21. For example, when the battery cell 21 is rectangular, the first trough 113 may be set to be rectangular. In addition, the first trough 113 is not limited to being located in the first accommodation trough 11a. The first trough 113 may be a hollow cavity of a cylinder or cuboid. One end of the cylinder or cuboid is fixed to the bottom of the first accommodation trough 11a. The cylinder or cuboid is disposed in the accommodation cavity. The hollow cavity of the cylinder or cuboid may wrap or partly wrap one of the battery cells 21, thereby also implementing the positioning of the battery cell 21.

It is hereby noted that the first end of the battery cell 21 is an end at which a positive electrode is disposed or an end at which a negative electrode is disposed. The second end of the battery cell 21 is an end at which a negative electrode is disposed or an end at which a positive electrode is disposed. The polarity of the first end and second end of the battery cell 21 is not limited, as long as the polarity of the first end is opposite to the polarity of the second end. The first electrode terminal 2121 is disposed at the first end, and the second electrode terminal 2122 is disposed at the second end. In other embodiments, both the first electrode terminal 2121 and the second electrode terminal 2122 may be disposed at the same end of the battery cell 21. For example, both the positive electrode terminal and the negative electrode terminal may be disposed at the same end of the battery cell 21. The battery cells 21 may be connected to each other in series or in parallel by the busbar, and the connection mode is not limited.

In some embodiments, the first housing 11 includes a fifth through-hole (not shown in the drawing) and a sixth through-hole (not shown in the drawing). The fifth through-hole is available for being passed through by the first conductive strip 70, and then the first conductive strip is connected to the first electrode terminal 2121 of the battery cell 21. The sixth through-hole is available for being passed through by the second conductive strip 80, and then the second conductive strip is connected to the second electrode terminal 2122 of the battery cell 21.

In some embodiments, a first fixing slot 116 and a first opening 116a that communicates with the first fixing slot 116 are provided on the inner side of one of the first sidewalls 112. The first opening 116a is configured to snap-fit one end of the circuit board 50 into the first fixing slot 116. The first fixing slot 116 is configured to fix one end of the circuit board 50 into the accommodation cavity.

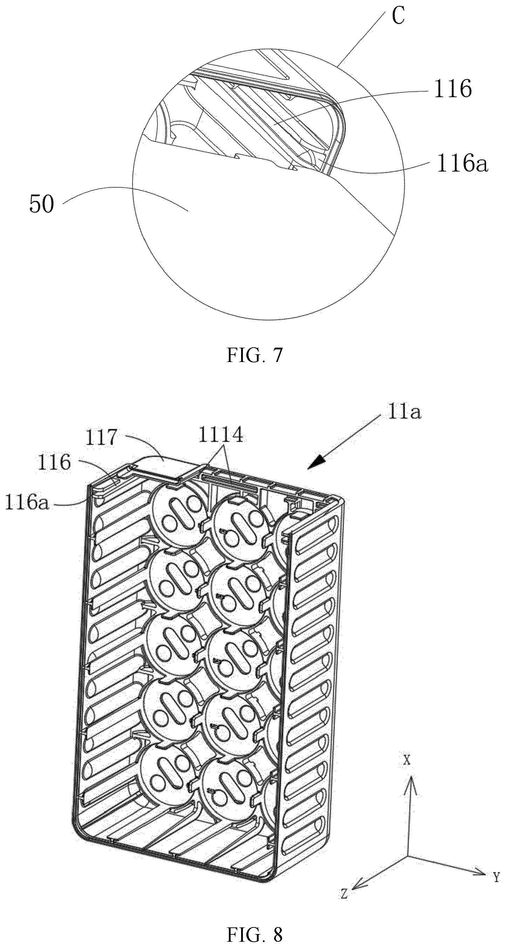

As shown in FIG. 8, in some embodiments, a first snap slot 1114 is provided on the inner side of the first top wall 111. The first snap slot 1114 communicates with the first fixing slot 116. The first snap slot 1114 is configured to fix one end of the circuit board 50 more firmly. Understandably, the first snap slot 1114 is not limited to communicating with the first fixing slot 116, as long as the first snap slot 1114 can fix one end of the circuit board 50.

In some embodiments, as shown in FIG. 1 and FIG. 8, an outlet 117 is disposed on the first housing 11. The outlet 117 facilitate a wire on the circuit board 50 to protrude from the outlet 117 to get connected to another external component. Preferably, the outlet 117 is disposed on the first top wall 111. The outlet 117 is close to the first snap slot 1114 and the first fixing slot 116, thereby facilitating a wire harness to extend out of the first housing 11 through the outlet 117.

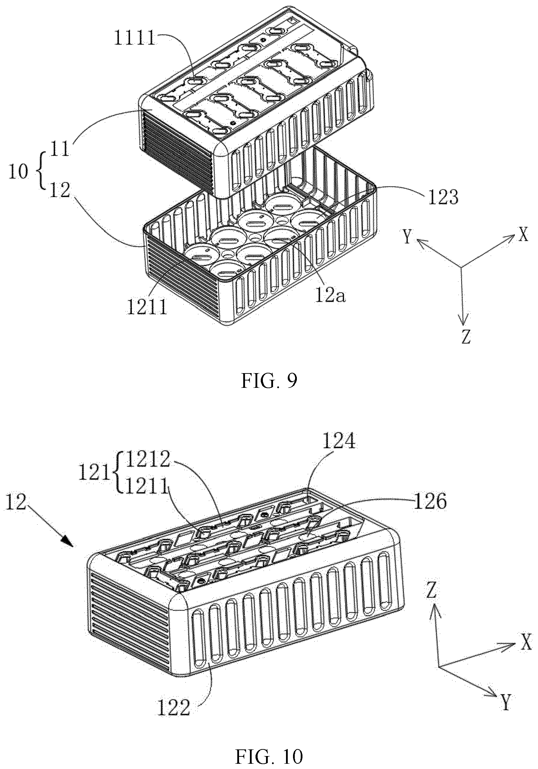

With respect to the second housing 12, as shown in FIG. 9 to FIG. 11, the second housing 12 is fixed to the first housing 11. The second housing 12 includes a second top wall 121 and a plurality of second sidewalls 122 connected to the second top wall 121. The second top wall 121 is disposed opposite to the first top wall 111. The second top wall 121 includes a second through-hole 1211. The second through-hole 1211 facilitates connection between an external component and the electrode terminal 212 of the battery cell 21.

Understandably, the first housing 11 may be fixed to the second housing 12 by bonding by means of an adhesive layer. However, the fixing manner between the first housing 11 and the second housing 12 is not limited to the bonding by means of an adhesive layer, but may be another fixing manner such as welding and screwing instead.

In some embodiments, the second housing 12 includes a glue injection hole 126 that communicates with the accommodation cavity. The glue injection hole 126 is configured to inject the resin layer into the battery cavity to bond and fix the battery cell 21.

In some embodiments, as shown in FIG. 8 and FIG. 9, the second housing 12 includes a second accommodation trough 12a. The second accommodation trough 12a is configured to accommodate the plurality of battery cells 21. The second accommodation trough 12a and the first accommodation trough 11a jointly form the accommodation cavity.

In some embodiments, the second housing 12 includes a plurality of second troughs 123. The second troughs 123 communicate with the second accommodation trough 12a. Each second trough 123 is configured to hold a second end of a battery cell 21 to limit the position of the battery cell 21 and reduce the relative displacement between the battery cell 21 and the housing 10 in the accommodation cavity.

In some embodiments, a second fixing slot 125 and a second opening 125a that communicates with the second fixing slot 125 are provided on the inner side of one of the opposite second sidewalls 122. The second opening 125a is configured to snap-fit another of the circuit board 50 into the second fixing slot 125. The second fixing slot 125 is configured to fix another of the circuit board 50 into the accommodation cavity.

In some embodiments, a second snap slot 1213 is provided on the inner side of the second top wall 121. The second snap slot 1213 communicates with the second fixing slot 125. The second snap slot 1213 is configured to fix another of the circuit board 50 more firmly.

In some embodiments, as shown in FIG. 2 and FIG. 10, the second housing 12 includes a fourth through-hole 124. The fourth through-hole 124 is available for being passed through by the second conductive strip 80, and then the second conductive strip is connected to the second electrode terminal 2122 of the battery cell 21.

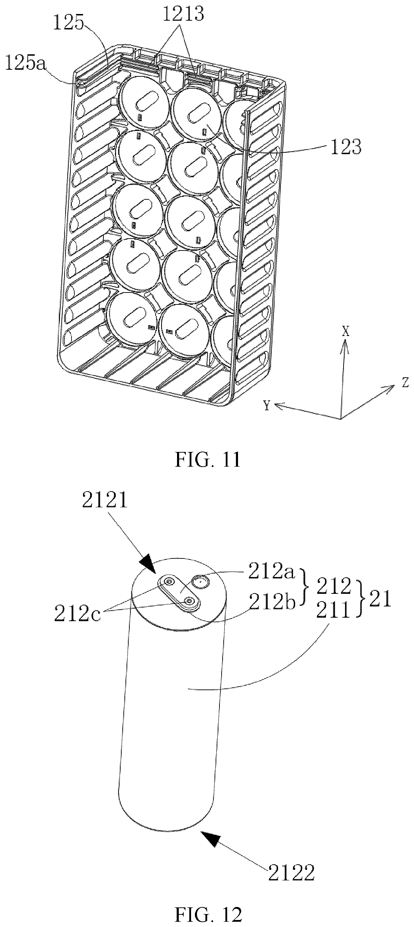

With respect to the cell assembly 20, as shown in FIG. 1 and FIG. 12, the cell assembly 20 is disposed in the accommodation cavity. The cell assembly 20 includes a plurality of battery cells 21. Each battery cell 21 includes a packaging shell 211 and an electrode terminal 212 disposed on an outer side of the packaging shell 211. The electrode terminal 212 includes a first electrode terminal 2121 and a second electrode terminal 2122. In some other embodiments, the battery cell 21 includes a packaging shell 211 and an electrode terminal 212 disposed on the outer side the packaging shell 211. In some embodiments, the packaging shell 211 may serve as the other electrode terminal 212. For example, the battery cell 21 includes a packaging shell 211 and a positive electrode terminal disposed on the outer side of the packaging shell 211. The packaging shell 211 includes a conductive material. The packaging shell 211 may serve as a negative electrode terminal of the battery cell 21.

It is hereby noted that the polarity of the first electrode terminal 2121 and the second electrode terminal 2122 is not limited. The first electrode terminal 2121 may be a positive electrode or negative electrode, and the second electrode terminal 2122 may be a negative electrode or positive electrode, as long as the polarity of the first electrode terminal 2121 is opposite to the polarity of the second electrode terminal 2122.

In some embodiments, as viewed along the first direction, at least one electrode terminal 212 of the battery cell 21 is located in the first through-hole 1111 of the first housing 11, thereby making it convenient to connect the first busbar 40 to the electrode terminal 212 of the battery cell 21 through the first through-hole 1111.

Understandably, "at least one electrode terminal 212" may be a negative electrode terminal or a positive electrode terminal of a single battery cell 21; may be both a negative electrode terminal and a positive electrode terminal of a single battery cell 21, without limiting the number of the battery cells 21; may be a negative electrode terminal or a positive electrode terminal formed by connecting a plurality of battery cells 21 in parallel; and may be both a positive electrode terminal and a negative electrode terminal formed by connecting a plurality of battery cells 21 in parallel. By connecting the positive electrode terminals and the negative electrode terminals of individual battery cells 21, the first busbar 40 enables normal working of the battery module.

In some embodiments, an electrode terminal 212 of the battery cell 21 includes a first part 212a and a second part 212b. The first part 212a is connected to the second part 212b. As viewed along the first direction, the first part 212a is located inside the second part 212b. The first part 212a is configured to be connected to the first busbar 40. When one end of the battery cell 21 is disposed in the first trough 113, the first part 212a protrudes from the first trough 113 and is located in the first through-hole 1111, and the second part 212b abuts on the bottom of the first trough 113. The electrode terminal 212 includes two conductive electrode posts 212c disposed in the first part 212a and configured to electrically connect electrode plates.

Preferably, the two conductive electrode posts 212c each are usually electrically connected to the same-polarity electrode plates battery cell 21. The same polarity may be positive or negative. When the two conductive electrode posts 212c are electrically connected to the positive electrodes electrode plates, the electrode terminal 212 is a positive electrode terminal. When the two conductive electrode posts 212c are electrically connected to the negative electrode plates, the electrode terminal 212 is a negative electrode terminal.

In some embodiments, the second part 212b includes an insulation spacer. The insulation spacer insulates the electrode terminal 212 from the packaging shell 211. The second part 212b is not limited to being an insulation spacer, but may be another substance instead. In some other embodiments, the second part 212b includes a weakly conductive strip. It is hereby noted that the shape of the plurality of battery cells 21 in the battery module 20 is not limited. In some embodiments, the shape of the battery cells 21 is cylindrical. The electrode terminals 212 of a battery cell 21 are disposed at two ends of the packaging shell 211 of the battery cell 21 respectively. That is, the first electrode terminal 2121 and the second electrode terminal 2122 are disposed at the two opposite ends of the packaging shell 211. Because a cylindrical battery cell 21 is rotatable in the accommodation cavity, a user can conveniently arrange the electrodes of the battery cell 21 at different angles to the housing 10 according to the actual mounting requirement of the first busbar 40. However, in some embodiments, the shape of the battery cells 21 is cuboidal. The electrode terminals 212 of a battery cell 21 are disposed at one end of the packaging shell 211 of the battery cell 21. That is, the first electrode terminal 2121 and the second electrode terminal 2122 are disposed at the same end of the packaging shell 211. In this case, a plurality of first busbars 40 disposed on the outer side of the first housing 11 may be configured to connect the positive electrodes and negative electrodes of the rectangular battery cells 21 to enable normal working of the battery module.

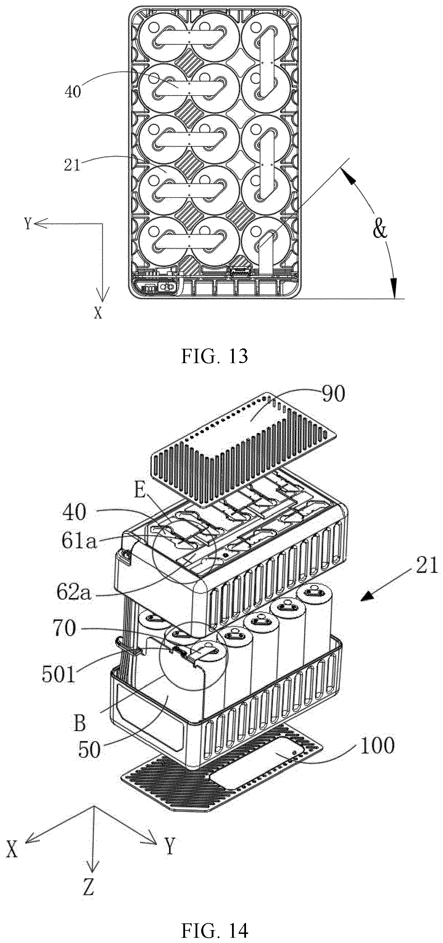

In some embodiments, as shown in FIG. 13, the cell assembly 20 includes three rows of battery cells 21 arranged in the second direction. Each battery cell 21 tilts at the same angle, for example, at a first angle that tilts at 45 degrees against the second direction, so that the distances between neighboring battery cells 21 are the same. The lengths of the plurality of first busbars 40 are the same, thereby simplifying the assembling process. In some other embodiments, the three rows of battery cells 21 may be arranged at different angles, without being limited.

With respect to the plurality of first busbars 40, as shown in FIG. 2, FIG. 4, and FIG. 5, the plurality of first busbars 40 are disposed on the first top wall 111. The plurality of first busbars 40 are configured to connect the electrode terminals 212 of the battery cells 21 located on the side of the first housing 11.

In some embodiments, the plurality of first busbars 40 connect the first electrode terminals 2121 and the second electrode terminals 2122 through the first through-hole 1111 to implement electrical conduction between the first busbar 40 and the battery cell 21 and enable normal working of the battery module.

In some embodiments, the first busbar 40 includes a first positioning hole (not shown in the drawing). The first positioning hole is a hole to which the first positioning rod 1113 is plugged, so that the first busbar 40 is limited to being positioned in the first busway 1112.

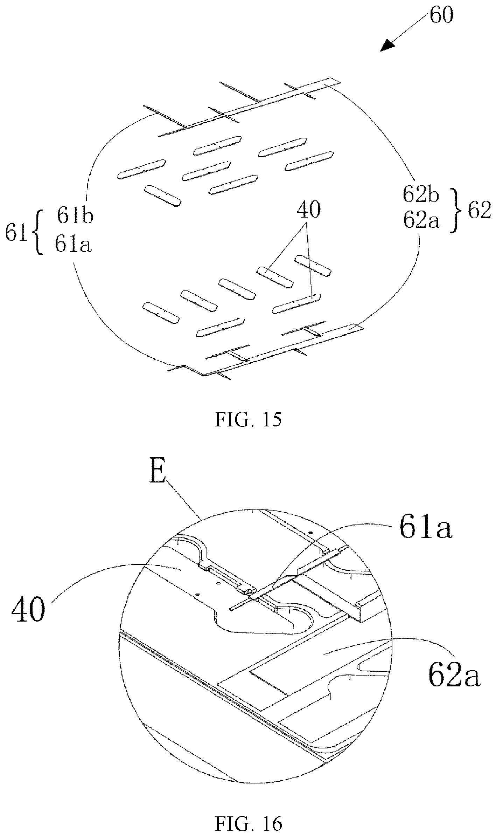

With respect to the sampling assembly 60, as shown in FIG. 2 and FIG. 14 to FIG. 16, the sampling assembly 60 is configured to sample voltage and temperature of the battery cells 21. The sampling assembly 60 includes a sampling wire 61. One end of the sampling wire 61 is connected to the circuit board 50, and another of the sampling wire 61 is connected to the plurality of battery cells 21.

In some embodiments, the sampling wire 61 includes a first sampling wire 61a. The first sampling wire 61a is disposed on a surface that is of the first housing 11 and that is away from the battery cells 21. One end of the first sampling wire 61a is connected to the circuit board 50, and another of the first sampling wire 61a is connected to the plurality of battery cells 21, so as to implement voltage sampling for the battery cells 21 on one side of the housing 10, that is, voltage sampling for the battery cells 21 located on the side of the first housing 11.

In some embodiments, the sampling wire 61 includes a second sampling wire 61b. The second sampling wire 61b is disposed on a surface that is of the second housing 12 and that is away from the battery cells 21. One end of the second sampling wire 61b is connected to the circuit board 50, and another of the second sampling wire 61b is connected to the plurality of battery cells 21, so as to implement voltage sampling for the battery cells 21 on the other side of the housing 10, that is, voltage sampling for the battery cells 21 located on the side of the second housing 12.

In some embodiments, the sampling assembly 60 includes a reinforcing plate 62. The reinforcing plate 62 reduces bends of the sampling wire 61, increases the service life of the sampling wire 61, and serves a function of fixing and protecting the sampling wire 61. The reinforcing plate 62 includes a first reinforcing plate 62a and a second reinforcing plate 62b. The first sampling wire 61a is mounted on the first reinforcing plate 62a. The first reinforcing plate 62a is mounted on a surface that is of the first housing 11 and that is away from the battery cells 21. That is, the first reinforcing plate 62a is mounted on the first top wall 111 of the first housing 11. The second sampling wire 61b is mounted on the second reinforcing plate 62b. The second reinforcing plate 62b is mounted on a surface that is of the second housing 12 and that is away from the battery cells 21. That is, the second reinforcing plate 62b is mounted on the second top wall 121 of the second housing 12.

In some embodiments, the sampling assembly 60 includes a temperature sensor (not shown in the drawing). The temperature sensor is disposed in the accommodation cavity. The temperature sensor is connected to the circuit board 50.

In some embodiments, the sampling wire 61 includes a jack plug (not shown in the drawing). The jack plug facilitates connection to the circuit board 50.

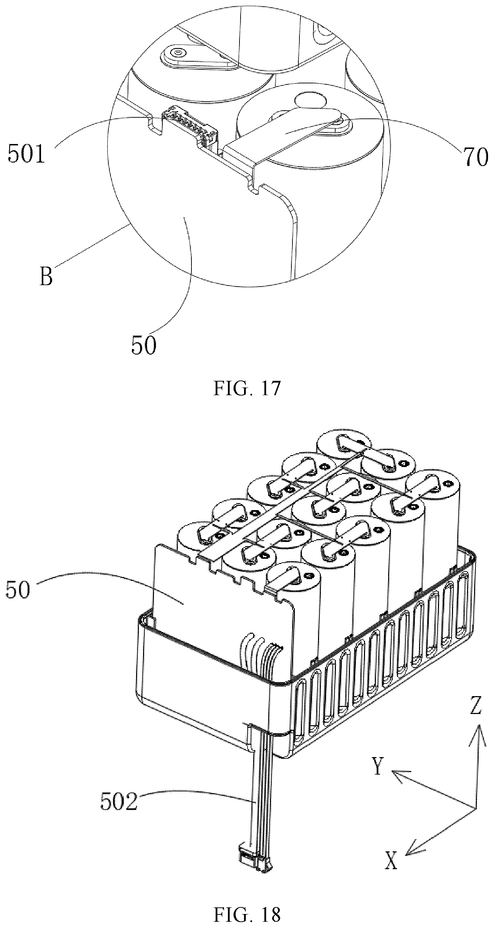

With respect to the circuit board 50, the first conductive strip 70 and the second conductive strip 80, as shown in FIG. 2, FIG. 14, and FIG. 17, the circuit board 50 may be configured to stabilize the voltage of the battery module and protect the normal working of the battery module. In addition, in a discharging process of the battery module, the circuit board 50 detects the voltage of the battery. When the state of charge of the battery is lower than a specified value, the circuit board makes the battery stop outputting power, so as to protect the battery. In a charging process of the battery module, when the battery is charged to full capacity, the circuit board 50 automatically cuts off the charging circuit to prevent the battery from being damaged by overcharge. The circuit board 50 is disposed in the accommodation cavity. One end of the first conductive strip 70 is connected to the circuit board 50, and another of the first conductive strip 70 is connected to the first electrode terminal 2121 of the battery cell 21. One end of the second conductive strip 80 is connected to the circuit board 50, and another of the second conductive strip 80 is connected to the second electrode terminal 2122 of the battery cell 21, so as to implement electrical connection between the circuit board 50 and the battery cell 21.

Understandably, as can be seen from FIG. 14, the circuit board 50 is located on one side of the battery cell 21. Two ends of the circuit board 50 are perpendicular to the first housing 11 and the second housing 12 respectively. The first conductive strip 70 and the second conductive strip 80 electrically connects the circuit board 50 and the battery cell 21. In this case, the first conductive strip 70 and the second conductive strip 80 in use are relatively short in length. However, the position of the circuit board 50 is not limited to the example described herein, and may be any position as long as the first conductive strip 70 and the second conductive strip 80 in use are relatively short in length. For example, the circuit board 50 is disposed on vertical edges on one side of the battery cell 21 and is perpendicular to both the first housing 11 and the second housing 12.

In some embodiments, the circuit board 50 includes a jack 501. The jack 501 is configured to be a jack into which the jack is plugged, so as to implement connection between the sampling wire 61 and the circuit board 50.

In some embodiments, an outgoing wire 502 is disposed on the circuit board 50. The outgoing wire 502 protrudes from the outlet 117 on the first housing 11 to get connected to another external component.

In some embodiments, a first snap block 503 is disposed at one end of the circuit board 50. The first snap block 503 may be snap-fastened to the first snap slot 1114, so as to fix one end of the circuit board 50 to the first housing 11.

In some embodiments, a second snap block 504 is disposed at another end of the circuit board 50. The second snap block 504 may be snap-fastened to the second snap slot 1213, so as to fix another of the circuit board 50 to the second housing 12.

With respect to the first baffle 90, as shown in FIG. 2 and FIG. 3, the first baffle 90 overlays a surface that is of the first housing 11 and that is oriented away from the battery cell 21. That is, the first baffle 90 overlays the first top wall 111 of the first housing 11. The first baffle 90 is configured to protect the first busbar 40 disposed on the first top wall 111, reduce the probability of contact between the first busbar 40 and an external component, and serve a function of sealing the side of the first housing 11 of the battery module. A surface that is of the first baffle 90 and that is away from the battery cell 21 is lower than the first top wall 111. Preferably, the surface that is of the first baffle 90 and that is away from the battery cell 21 is lower than the first top wall 111 by 0.5 mm. Preferably, the surface that is of the first baffle 90 and that is away from the battery cell 21 is lower than the first top wall 111 by at least 0.3 mm. The first housing 11 collides with the ground first, thereby protecting the first baffle 90 and alleviating damage to the first busbar 40 caused by the impact on the first busbar 40.

Understandably, the means to reduce the probability of contact between the first busbar 40 and an external component and seal the battery module is not limited to the first baffle 90, and may be other means. For example, a resin layer is added to the first top wall 111, or glue is poured so that the solidified glue protects the first busbar 40. In addition, when the battery module drops to the ground, the solidified glue serves a cushion effect, thereby more effectively protecting the first busbar 40.

With respect to the resin layer, the resin layer bonds and fixes the plurality of battery cells 21, and/or bonds and fixes the plurality of battery cells 21 to the first housing 11, and/or bonds and fixes the plurality of battery cells 21 to the second housing 12.

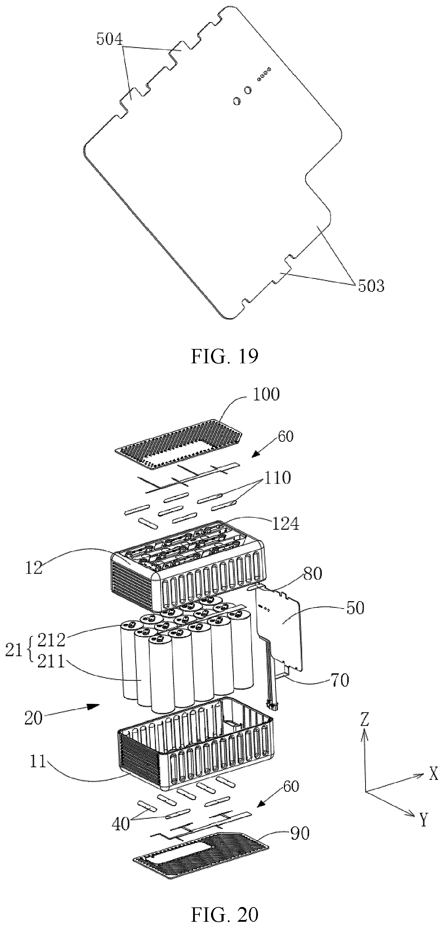

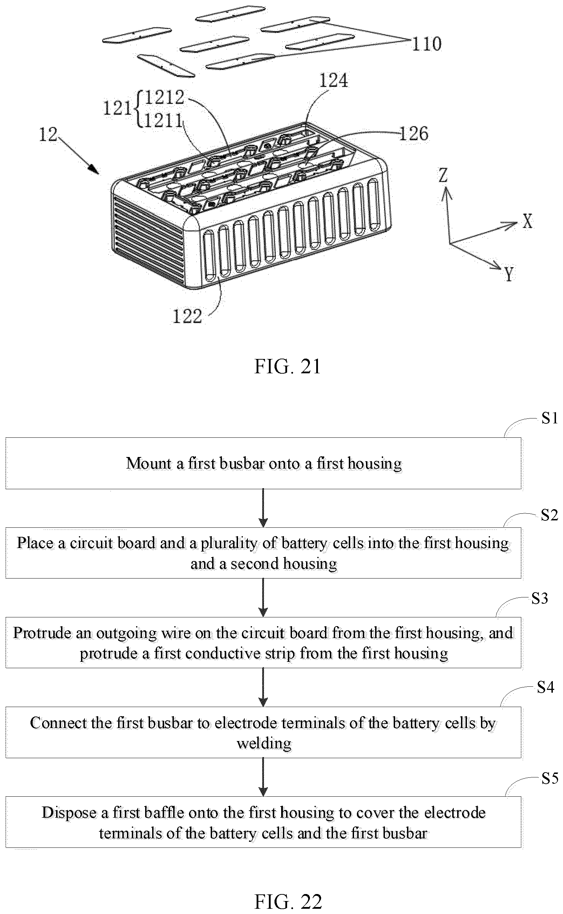

In another embodiment of this application, as shown in FIG. 20 and FIG. 21, the battery module includes a plurality of second busbars 110. The plurality of second busbars 110 are disposed on the second top wall 121. The plurality of second busbars 110 are configured to connect the electrodes of the battery cells 21 located on the side of the second housing 12. In this case, by virtue of the characteristic that the electrodes of a cylindrical battery cell 21 are disposed at two opposite ends, the plurality of first busbars 40 may be connected to the first electrode terminals 2121 of the cylindrical battery cells 21 through the first through-holes 1111. The plurality of second busbars 110 are connected to the second electrode terminals 2122 of the cylindrical battery cells 21 through the second through-holes 1211, so as to implement electrical conduction between the first busbars 40, the second busbars 110, and the battery cells 21 and enable normal working of the battery module.

Understandably, it is not defined whether a first busbar 40 and a second busbar 110 is connected to a positive electrode or a negative electrode of a battery cell 21. For example, when the first busbar 40 is connected to the negative electrode of the battery cell 21, the second busbar 110 is connected to the positive electrode of the battery cell 21, so that the battery module can work normally. When the first busbar 40 is connected to the positive electrode of the battery cell 21, the second busbar 110 is connected to the negative electrode of the battery cell 21, so that the battery module can work normally. Definitely, similar to the first busbar 40, the second busbar 110 may be arranged in the following way: when both electrodes of a cuboidal battery cell 21 are located at the same end of the battery cell, the second busbar 110 is connected to both the positive electrode and the negative electrode of the battery cell, and the battery module can work normally.

In some embodiments, the second top wall 121 of the second housing 12 includes a plurality of second busways 1212. One of the second busways 1212 communicates with at least two second through-holes 1211. One of the second busbars 110 is disposed in one of the second busways 1212. The second busway 1212 is configured to hold the second busbar 110.

In some embodiments, as viewed along a direction opposite to the first direction, at least one electrode terminal 212 of the battery cell 21 is located in the second through-hole 1211 of the second housing 12, thereby making it convenient to connect the second busbar 110 to the electrode terminal 212 of the battery cell 21 through the second through-hole 1211. The direction opposite to the first direction means a direction perpendicular to the second top wall 121 of the second housing 12.

With respect to the second baffle 100, as shown in FIG. 1, the second baffle 100 overlays a surface that is of the second housing 12 and that is oriented away from the battery cell 21. That is, the second baffle 100 overlays the second top wall 121 of the second housing 12. The second baffle 100 is configured to protect the second busbar 110 disposed on the second top wall 121, reduce the probability of contact between the second busbar 110 and an external component, and serve a function of sealing the side of the second housing 12 of the battery module.

A surface that is of the second baffle 100 and that is away from the battery cell 21 is lower than the second top wall 121. Preferably, the surface that is of the second baffle 100 and that is away from the battery cell 21 is lower than the second top wall 121 by 0.5 mm. Preferably, the surface that is of the second baffle 100 and that is away from the battery cell 21 is lower than the second top wall 121 by at least 0.3 mm. In this way, when the battery module drops to the ground, the second housing 12 collides with the ground first, thereby protecting the second baffle 100 and alleviating damage to the second busbar 110 caused by the impact on the second busbar 110.

Understandably, the means to reduce the probability of contact between the second busbar 110 and an external component and seal the battery module is not limited to the second baffle 100, and may be other means. For example, glue is poured to the second top wall 121 so that the solidified glue protects the second busbar 110. In addition, when the battery module drops to the ground, the solidified glue serves a cushion effect, thereby more effectively protecting the second busbar 110.

It is hereby noted that, as shown in FIG. 22, an assembling process of the battery module according to an embodiment of this application includes the following steps:
Step S1: Mount the first busbar 40 onto the first housing 11.
Step S2: Place the circuit board 50 and the plurality of battery cells 21 into the first housing and the second housing.
Step S3: Protrude the outgoing wire 502 on the circuit board 50 from the first housing 11, and protrude the first conductive strip 70 from the first housing 11.
Step S4: Connect the first busbar 40 to the electrode terminals of the battery cells 21 by welding.
Step S5: Dispose the first baffle 100 onto the first housing 11 to cover the electrode terminals of the battery cells 21 and the first busbar 40.

In some embodiments, the assembling process of the battery module further includes step S6: connect the sampling assembly 60 to the first busbar 40.

In some embodiments, the assembling process of the battery module further includes step S7: dispose the first baffle 100 onto the first housing 11 to cover the electrode terminal of the battery cell 21, the sampling assembly 60, and the first busbar 40.

In some embodiments, the assembling process of the battery module further includes step S8: dispose flowable resin onto an outer side of the first housing 10, and then solidify the resin to form a resin layer. The resin layer is configured to fix the first busbar 40 to the first housing 10.

In some embodiments, in step S3, the first conductive strip 70 protrudes vertically from the first housing 11. The vertically protruding first conductive strip 70 facilitates a bending operation in a subsequent process, reduces the probability of contact between the first conductive strip 70 and the first housing 11, and alleviates damage to the first conductive strip 70.

In some embodiments, step S1 further includes: mounting the second busbar 40 onto the second housing 12.

In some embodiments, step 3 further includes: protruding the second conductive strip 80 from the second housing 12.

In some embodiments, step S3 further includes: protruding the second conductive strip 80 vertically from the first housing 12. The vertically protruding second conductive strip 80 facilitates a bending operation in a subsequent process, reduces the probability of contact between the second conductive strip 80 and the first housing 12, and alleviates damage to the second conductive strip 80.

In some embodiments, step S4 further includes: connecting the second busbar 40 to the electrode terminal of the battery cell 21 by welding.

In some embodiments, step S6 in the assembling process of the battery module further includes: connecting the sampling assembly 60 to the second busbar 40.

In some embodiments, step S7 further includes: disposing the second baffle 40 onto the second housing 11 to cover the electrode terminal of the battery cell 21 and the second busbar 40.

In some embodiments, step S8 further includes: disposing flowable resin onto an outer side of the second housing 10, and then solidify the resin to form a resin layer. The resin layer is configured to fix the second busbar 40 to the second housing 12.

In some embodiments of this application, the housing 10, the cell assembly 20, and the first busbar 40 are disposed. The housing 10 defines an accommodation cavity. The housing 10 includes a first housing 11 and a second housing 12. The first housing 11 is fixed to the second housing 12. The first housing 11 and the second housing 12 together form the accommodation cavity. The cell assembly 20 is disposed in the accommodation cavity. The cell assembly 20 includes a plurality of battery cells 21. Each battery cell 21 includes a packaging shell 211 and an electrode terminal 212 disposed on an outer side of the packaging shell 211. The electrode terminal 212 includes a first electrode terminal 2121 and a second electrode terminal 2122. The first housing 11 includes a first top wall 111 and a plurality of first sidewalls 112 connected to the first top wall 111. The first top wall 111 includes a first through-hole 1111. In addition, a plurality of first busbars 40 are disposed on the first top wall 111, and the plurality of first busbars 40 are connected to the first electrode terminals 2121 through the first through-holes 1111. In this way, because the first busbars 40 are directly disposed on the top wall 111 of the first housing 11, in a process of assembling a battery module, the first busbars 40 can be connected to the battery cells 21 by just directly fixing the first housing 11 and the second housing 12 together, thereby improving the efficiency and convenience of assembling the battery module.

This application further provides an embodiment of an electrical device. The electrical device includes the foregoing battery module. The electrical device includes, but is not limited to, two-wheeled electric vehicles, energy storage devices, and handheld electrical tools. The functionality and structure of the battery module can be learned by referring to the foregoing some embodiments, and are omitted herein.

What is described above is merely some embodiments of this application, and does not limit the patent scope of this application in any way. All equivalent structural variations and equivalent process variations made by using the content of the specification and the drawings of this application, and the content hereof used directly or indirectly in other related technical fields, still fall within the patent protection scope of this application.

## Claims

1. A battery module, comprising:
a housing, wherein the housing defines an accommodation cavity, the housing comprises a first housing and a second housing, the first housing is fixed to the second housing, and the first housing and the second housing together form the accommodation cavity;
a cell assembly, disposed in the accommodation cavity, wherein the cell assembly comprises a plurality of battery cells, each battery cell comprises a packaging shell and an electrode disposed on an outer side of the packaging shell, and the electrode comprises a first electrode terminal and a second electrode terminal; wherein
the first housing comprises a first top wall and a plurality of first sidewalls connected to the first top wall, and the first top wall comprises a first through-hole; and
a plurality of first busbarsare disposed on the first top wall, wherein the plurality of first busbars are connected to the first electrode terminals through the first through-hole.

2. The battery module according to claim 1, wherein the second housing comprises a second top wall and a plurality of second sidewalls connected to the second top wall, the second top wall is disposed opposite to the first top wall, and the second top wall comprises a second through-hole; and
the first electrode terminal and the second electrode terminal are disposed at two opposite ends of the packaging shell 1); the battery module comprises a plurality of second busbars disposed on the second top wall, and the plurality of second busbars are connected to the second electrode terminals through the second through-hole.

3. The battery module according to claim 1, wherein the first electrode terminals and the second electrode terminals are disposed at a same end of the packaging shell, and the plurality of first busbars are connected to the second electrode terminals.

4. The battery module according to claim 1, wherein the first top wall of the first housing comprises a plurality of first busways, one of the first busways communicates with at least two first through-holes, one of the first busbars is disposed in one of the first busways;
as viewed along a first direction, at least one electrode of the battery cell is located in one of the first through-holes.

5. The battery module according to claim 2, wherein the second top wall of the second housing comprises a plurality of second busways, one of the second busways communicates with at least two second through-holes, one of the second busbars is disposed in one of the second busways, and, as viewed along a direction opposite to a first direction, at least one electrode of the battery cell is located in one of the second through-holes.

6. The battery module according to claim 1, wherein the first housing comprises a first accommodation trough; and
the second housing comprises a second accommodation trough, and the first accommodation trough and the second accommodation trough jointly form the accommodation cavity.

7. The battery module according to claim 6, wherein the first housing comprises a plurality of first troughs, and the plurality of first troughs communicate with the first accommodation trough; and
the second housing comprises a plurality of second troughs, the second troughs communicate with the second accommodation trough, a first end of one of the battery cells is disposed in one of the first troughs, a second end of the battery cell is disposed in one of the second troughs, the first electrode terminal is disposed at the first end, and the second electrode terminal is disposed at the second end.

8. The battery module according to claim 1, wherein the first busbar comprises a first positioning hole; and
a first positioning rod extends from the first top wall of the first housing away from the battery cell, and the first positioning rod is plugged into the first positioning hole.

9. The battery module according to claim 8, wherein a guide block is disposed on a sidewall of the first busway, the sidewall away from the first positioning rod, and the guide block comprises a sloping side.

10. The battery module according to claim 2, wherein the battery module comprises a circuit board, wherein the circuit board is disposed in the accommodation cavity, and the circuit board is connected to the plurality of battery cells; and
the battery module comprises a sampling assembly, the sampling assembly comprises a sampling wire, one end of the sampling wire is connected to the circuit board, and another of the sampling wire is connected to the plurality of battery cells.

11. The battery module according to claim 10, wherein the sampling wire comprises a first sampling wire, one end of the first sampling wire is connected to the circuit board, the first sampling wire is disposed on a surface the first housing, the surface away from the battery cells, and another of the first sampling wire is connected to the plurality of battery cells.

12. The battery module according to claim 11, wherein the sampling wire comprises a second sampling wire, the second sampling wire is disposed on a surface of the second housing, the surface away from the battery cells, one end of the second sampling wire is connected to the circuit board, and another of the second sampling wire is connected to the plurality of battery cells.

13. The battery module according to claim 10, wherein the battery module comprises a first conductive strip and a second conductive strip, one end of the first conductive strip is connected to the circuit board, another of the first conductive strip is connected to the first electrode terminal of the battery cell, one end of the second conductive strip is connected to the circuit board, and another of the second conductive strip is connected to the second electrode terminal of the battery cell.

14. The battery module according to claim 13, wherein the first housing comprises a third through-hole, and the third through-hole is available for being passed through by the first conductive strip; and
the second housing comprises a fourth through-hole, and the fourth through-hole is available for being passed through by the second conductive strip.

15. The battery module according to claim 13, wherein the first housing comprises a fifth through-hole and a sixth through-hole, the fifth through-hole is available for being passed through by the first conductive strip, and the sixth through-hole is available for being passed through by the second conductive strip.

16. The battery module according to claim 10, wherein the sampling wire comprises a jack plug; and
the circuit board comprises a jack, and the jack plug is plugged into the jack.

17. The battery module according to claim 10, wherein a first fixing slot and a first opening are provided on one of opposite first sidewalls of the first housing, the first fixing slot and the first opening communicates with the first fixing slot; and
a second fixing slot and a second opening are provided on an inner side of one of opposite second sidewalls of the second housing, the second fixing slot and the second opening communicates with the second fixing slot, one end of the circuit board is snap-fitted into the first fixing slot through the first opening, and another of the circuit board is snap-fitted into the second fixing slot through the second opening.

18. The battery module according to claim 1, wherein the battery module comprises a resin layer, and the resin layer bonds and fixes the plurality of battery cells, and/or bonds and fixes the plurality of battery cells to the first housing, and/or bonds and fixes the plurality of battery cells to the second housing.

19. The battery module according to any one of claims 1 to 18, wherein the battery module comprises a first baffle and a second baffle, the first baffle overlays a surface of the first housing, the surface oriented away from the battery cell, and the second baffle overlays a surface of the second housing, the surface oriented away from the battery cell.

20. An electrical device, wherein the electrical device comprises the battery module according to any one of claims 1 to 19.
